Europäisches Patentamt

European Patent Office

Office européen des brevets

(11) Publication number: **0 117 685**
**B1**

(12) **EUROPEAN PATENT SPECIFICATION**

(45) Date of publication of patent specification: **20.12.89**

(21) Application number: **84301001.8**

(22) Date of filing: **16.02.84**

(51) Int. Cl.⁴: **A 23 G 3/30**

(54) **Bubble gum compositions.**

(30) Priority: **01.03.83 US 471074**

(43) Date of publication of application:
**05.09.84 Bulletin 84/36**

(45) Publication of the grant of the patent:
**20.12.89 Bulletin 89/51**

(84) Designated Contracting States:
**BE CH DE FR GB LI SE**

(56) References cited:
**GB-A- 928 758**
**GB-A- 934 596**
**GB-A- 963 518**
**NL-A-7 005 471**
**US-A-3 085 048**
**US-A-3 655 866**

(73) Proprietor: **WARNER-LAMBERT COMPANY**
**201 Tabor Road**
**Morris Plains New Jersey 07950 (US)**

(72) Inventor: **Graff, Allan H.**
**27 Dunham Road**
**Hartsdale New York 10530 (US)**
Inventor: **Corsello, Vincent**
**98 Evans Avenue**
**Albertson New York 11507 (US)**
Inventor: **Glass, Michael**
**10-15 Ellis Avenue**
**Fairlawn New Jersey 07410 (US)**

(74) Representative: **Jones, Michael Raymond et al**
**HASELTINE LAKE & CO. Hazlitt House 28**
**Southampton Buildings Chancery Lane**
**London WC2A 1AT (GB)**

Courier Press, Leamington Spa, England.

# EP 0 117 685 B1

**Description**

This invention relates to gum bases having anhydrous dicalcium phosphate as a filler, and bubble gum compositions incorporating such gum bases.

Mineral materials such as calcium carbonate, magnesium silicate and magnesium carbonate, among others, have long been known to be effective additives for chewing gum compositions. Ordinarily, these materials are used as fillers for the chewing gum composition, for the purpose of reducing cost, texturizing and softening the rubber in the gum base. Additionally, it has been known to use fillers for the purpose of holding in flavour. Thus U.S. Patent Specification No. 2,076,112 discloses the use of mineral ingredients such as anhydrous magnesium silicate, commonly known as talc, for the purpose of improving the consistency of the chewing gum as a whole, and helping to hold in the flavour as the chewing gum is masticated.

More recently, dicalcium phosphate has been added to chewing gum compositions as an anticariogenic agent. More particularly, U.S. Patent Specification No. 3,011,949 discloses chewing gum compositions containing solid powder fillers such as dicalcium phosphate, for the purpose of supplementing the supply of calcium and phosphate in saliva. This supplement helps to aid against decay-producing acids that are produced and exist in the saliva. That specification discloses that the beneficial effect of the dicalcium phosphate is easily generated by the chewing gum during mastication to provide this effect. The dicalcium phosphate is disclosed as an improved source of calcium and phosphate over other possible sources.

U.S. Patent Specification No. 3,655,866 discloses a releasable form of dicalcium phosphate dihydrate prepared for use in sugarless gum compositions. The dicalcium phosphate is coated with a water-soluble polyol or mixture of polyols, for example sorbitol, xylitol or mannitol, prior to the incorporation of the mineral material into the gum composition. That specification also discloses and claims a process for incorporation of the dicalcium phosphate dihydrate.

U.S. Patent Specification No. 4,064,274 teaches that gum bases containing calcium carbonate as a filler produce chewing gums which tend to lose their sweetness retention after a few weeks of storage.

U.S. Patent Specification No. 3,085,048 teaches an improved process for coating dicalcium phosphate with sugar such that the dicalcium phosphate will be gradually released into the saliva to contribute to an anticariogenic effect. The coated dicalcium phosphate is added to the gum composition and released slowly when the chewing gum is masticated.

In U.S. Patent Specification No. 4,238,475, several mineral materials are disclosed as having therapeutic value when included in chewing gums. Magnesium hydroxide, calcium carbonate, dicalcium phosphate and others are disclosed in a chewing gum composition which is capable of releasing these finely-divided water insoluble therapeutic materials into the saliva as mastication occurs. Thus that specification concentrates on the extension of sweetening release by the addition of a second sweetener which is released subsequent to the first sweetener. The therapeutic, mineral component is coated with gum arabic to facilitate the release from the chewing gum into the saliva to prevent the resorption of the mineral component back into the gum base.

NL—A—7005471 discloses a chewing gum composition which comprises a gum base, a flavouring agent and a sweetening agent, in which the gum base includes a filler which includes anhydrous dicalcium phosphate. It does however not mention a bubble gum composition or bubble gums.

Heretofore, however, there has not been a bubble gum composition which has used dicalcium phosphate in the gum base itself as a means of providing better film-forming capability. In particular, none of the references suggests the use of the anhydrous form of dicalcium phosphate in any aspect of a bubble gum composition.

The present applicants are aware that calcium carbonate cannot be effectively used in gum bases which contain food acidulents, such as malic or citric acids. This is because of the acid-base reaction that is produced between the mineral material and the acidulent. The result of this reaction is the production of carbon dioxide which inflates the gum package. This is a deleterious effect since the package may burst due to inflation, making the product defective and subject to becoming stale. Additionally, the food acidulent is consumed in the acid-base reaction, thereby defeating its intended purpose.

To attempt to overcome the disadvantages of calcium carbonate, the applicant tried to obtain the desired film-forming, chew and stability characteristics by substituting magnesium silicate into the gum base of bubble gum compositions which contained acidulents. It was found, however, that film-forming properties of the overall chewing gum wer enot as good as with the calcium carbonate, and further that a tough undesirable chew and ·undesirable flavour release characteristics were produced.

Film-forming is particularly important in chewing gum compositions intended to form bubbles.

In chewing gum compositions intended for blowing bubbles, i.e. bubble gum compositions, the ease and quality of the bubble are significant considerations and are obviously dependent on the combination of the ingredients in the gum base. The gum base filler is known to play a part in the overall film-forming (bubble-producing) capability of the chewing gum composition as a whole. Films which are too thick may be difficult to form and blow into bubbles, whereas films which are very thin may produce a bubble which breaks too easily.

According to one aspect of the present invention, there is provided a bubble gum composition which

2

comprises a gum base, a flavouring agent, a filler, and a sweetening agent, characterised in that there is incorporated into the gum base a filler which aids the provision of improved bubble and chew characteristics, the filler in the gum base comprising anhydrous dicalcium phosphate in an amount of from 4% to 30% by weight of the gum base.

The gum base may include a natural or synthetic rubber.

According to another aspect of the present invention, there is provided a gum base for a bubble gum composition having improved film-forming and bubble forming capability, flavour release and chew characteristics, the gum base comprising a natural or synthetic rubber and an anhydrous dicalcium filler, the filler being present in the amount of from 4% to 30% by weight of the gum base.

The present invention makes it possible to formulate a gum base which, when incorporated in a bubble gum composition, allows for large, easily formed bubbles to be blown, while maintaining good flavour impact and release and a delicate chew balance.

Whereas it is known that chewing gum compositions containing calcium carbonate as a filler develop a perceptively harder chew after an initial five minutes of mastication, by virtue of the present invention it is possible to prepare a bubble gum composition which maintains an excellent chew for ten to fifteen minutes or longer.

Dicalcium phosphate in anhydrous form, when incorporated in the gum base of a chewing gum composition, in the specified amounts, can produce excellent film-forming, stability and chew characteristics, in addition to good flavour impact and release.

The anhydrous dicalcium phosphate is present as the sole filler, or as one of a plurality of fillers, in the amount of from 4% to 30% by weight of the gum base.

The bubble gum composition may contain, in addition to the gum base, the flavouring agent and the sweetening agent, an acidulent.

The present applicants have also discovered that the anhydrous dicalcium phosphate filler employed in the present invention is particularly useful where the gum base is to be formulated into a bubble gum composition which contains food acidulents. More particularly, the anhydrous dicalcium phosphate filler is extremely useful in gum bases to be used in sour gum compositions, e.g. citrus-flavoured chewing gums and the like, where acidulents are prevalent.

Although both the dihydrate form as well as the anhydrous form of dicalcium phosphate are useful as fillers, the filler (apart from any additional filler(s)) employed in the present invention is the anhydrous form. Dicalcium phosphate anhydrate can be used as a filler in a gum base for gum compositions in the same amount as traditional fillers, that is, in the general range from 4% to 30% by weight of the gum base. It is preferred, however, that anhydrous dicalcium phosphate be present in the gum base in the range from 5% to 20%, more preferably in the range from 5% to 13%, by weight of the gum base.

The present applicants have discovered that the anhydrous form of the dicalcium phosphate filler has advantages over the dihydrate form when incorporated into a gum base. The anhydrous form is less temperature-sensitive during the gum base manufacturing process than the dihydrate. This is because the dihydrate form tends to lose its moisture at a non-controlled and non-predictable rate during processing of the gum base, which results in unacceptable variability in base processing and in the finished gum processing and chew characteristics. The anhydrous form generally has a larger, harder and coarser particle than the dihydrate, all of which contribute to the chew characteristics of the overall bubble gum composition. Particle size and abrasion generally affect the way in which the filler modifies the texture of the gum base and imparts a particular film-forming capability. In the present invention, it is believed that the particle size, hardness and abrasiveness of the anhydrous form is at least in part responsible for the excellent properties of the gum bases and bubble gum compositions of the present invention. A comparison of physical properties of the anhydrous and dihydrate forms of dicalcium phosphate are indicated below. These values were taken from the manufacturer's product specification sheets (Monsanto Co.).

|  | Anhydrous dicalcium phosphate | Dicalcium phosphate dihydrate |
| --- | --- | --- |
| Loss of moisture on ignition | 6.6—8.5% | 24.5—26.5% |
| MOHS Hardness | 3.5 | 2.5 |
| Radioactive Dentin Abrasion (RDA) | 1250 | 350 |
| Mean particle | 15—16 | 9—10 |
| Diameter (Coulter counter, volume average) | micrometres | micrometres |
| Particle size* 200 Screen 325 Screen | 1.0% maximum 98.0% maximum | 0.1 maximum 98.1% maximum |

* Indicates % of particles passing through a 200 size and 325 size screen. This confirms the mean particle diameter measurement.

Loss of moisture on ignition is an indication of the extent of water loss during high temperature exposure. As previously mentioned, the dihydrate form loses a significantly higher percentage of water which cannot be controlled or predicted.

Anhydrous dicalcium phosphate, used as a gum base filler in a food acid-containing chewing gum, for instance a fruit flavour gum, yields a stable product without compromising the quality of taste or texture. Thus, it has advantages over other filler materials traditionally used in the art, in that it combines excellent chew properties with stability and flavour release characteristics which no previous mineral filler was in itself capable of providing in food containing acidulents.

Gum bases using anhydrous phosphate as filler can be incorporated into sugar or sugarless gum comnpositions, which can be made into bubble gum products. The anhydrous dicalcium phosphate can be mixed with the other component(s) of the gum base when the base is made, or alternatively added to the other component(s) of the gum base just prior to incorporation of the base into the bubble gum composition. In essence, the anhydrous dicalcium phosphate-filled gum bases of the present invention can be used with any compatible bubble gum composition, but it is most effective and demonstrates its fullest advantages when incorporated into acidic bubble gum compositions, e.g. citrus flavoured bubble gums.

The amount of gum base employed will vary greatly depending on various factors such as the type of base used, consistency desired and other components used to make the final product. In general, amounts of gum base of from 5% to 45% by weight of the final bubble gum composition are acceptable for use in bubble gum compositions, with preferred amounts of from 15% to 25% by weight. The gum base used in the present invention may be any water-insoluble gum base well known in the art. Illustrative examples of suitable polymers in gum bases include both natural and synthetic elastomers and rubbers. For example, those polymers which are suitable in gum bases, include, without limitation, substances of vegetable origin such as chicle, jelutong, balata, gutta-percha, lechi caspi, sorra and crown gum. Synthetic elastomers such as butadiene-styrene copolymers, isobutylene-isoprene copolymers, polyethylene, polyisobutylene and polyvinyl acetate and mixtures thereof, are particularly useful.

The gum base may contain elastomer solvents to aid in softening the rubber component. Such elastomer solvents may comprise methyl, glycerol or pentaerythritol esters of rosins or modified rosins, such as hydrogenated, dimerized or polymerized rosins or mixtures thereof. Examples of elastomer solvents suitable for use herein include pentaerythritol ester of partially hydrogenated wood rosin, pentaerythritol ester of wood rosin, glycerol ester of partially dimerized rosin, glycerol ester of polymerized rosin, glycerol ester of tall oil rosin, glycerol ester of wood rosin and partially hydrogenated wood rosin, and partially hydrogenated methyl ester of rosin and mixtures thereof. The solvent may be employed in an amount ranging from 10% to 75%, preferably from 45% to 70%, by weight of the gum base.

A variety of traditional ingredients used as plasticisers or softeners, such as lanolin, stearic acid, sodium stearate, potassium stearate, glyceryl triacetate and glycerine, may also be incorporated into the gum base to obtain a variety of desirable textures and consistency properties. These additional materials are generally employed in amounts of up to 30% by weight and preferably in amounts of from 3% to 7% by weight of the final gum base.

The bubble gum compositions employing the gum bases of the present invention contain a sweetening agent. The sweetening agent may be selected from a wide range of materials including water-soluble agents, water-soluble artificial sweeteners, and dipeptide-based sweeteners, including mixtures thereof. Without being limited to particular sweeteners, representative illustrations encompass:

A. water-soluble sweetening agents, e.g. monosaccharides, disaccharides, and polysaccharides, such as xylose, ribose, glucose, mannose, galactose, fructose, dextrose, sucrose, sugar and maltose; partially

4

# EP 0 117 685 B1

hydrolyzed starch or corn syrup solids; and sugar alcohols such as sorbitol, xylitol and mannitol; and mixtures thereof;

B. water-soluble artificial sweeteners, e.g. the soluble saccharin salts, i.e. sodium or calcium saccharin salts; cyclamate salts, acesulfame-K; and the free acid form of saccharin; and

C. dipeptide-based sweeteners, e.g. L - aspartyl - L - phenylalanine methyl ester and material described in U.S. Patent Specification No. 3,492,131.

In general, the amount of sweetener will vary with the desired amount of sweetener selected for a particular bubble gum composition. This amount will normally be from 0.01% to 90% by weight when using an easily extractable sweetener. As previously mentioned, the anhydrous dicalcium phosphate filler used in the gum base in an amount in accordance with the present invention, helps effectively to release the sweetening agents over time. This is an additional benefit to the film-forming improvement of the present invention. The water-soluble sweeteners described in category A above are used preferably in an amount from 25% to 75% by weight, and more preferably from 50% to 65% by weight of the final bubble gum composition. In contrast, the artificial sweeteners described in categories B and C are used preferably in an amount of from 0.005% to 5.0% and more preferably from 0.05% to 2.5% by weight of the final bubble gum composition. These amounts are ordinarily necessary to achieve a desired level of sweetness independent from the flavour level achieved from flavour oils.

The bubble gum composition of the present invention may additionally include the conventional additives of colouring agents such as titanium dioxide; emulsifiers such as lecithin and glycerol monostearate; and additional fillers such as aluminium hydroxide, alumina, aluminium silicates, and talc and combinations thereof. These additional fillers may also be used in the gum base in various amounts along with the anhydrous dicalcium phosphate, provided the total amount of fillers present remains between 4% and 30% by weight. Preferably the amount of additional filler(s) when used will vary from 25% to 75% of the total fillers present in the gum base. By doing so, the chew characteristics and texture are varied as desired without destroying the advantages of the anhydrous dicalcium phosphate. The improvement in film-forming capability and stability in the presence of food acidulents is directly related to the amount of anhydrous dicalcium phosphate filler present in the gum base.

Flavouring agents well known to the chewing gum art may be added to the bubble gum compositions of the present invention. These flavouring agents may be chosen from synthetic flavour oils and/oils derived from plants, flowers and fruits, and combinations thereof. Representative flavour oils include: spearmint oil, cinnamon oil, oil of wintergreen (methylsalicylate) and peppermint oils. Also useful are artificial, natural or synthetic fruit flavours such as citrus oil including lemon, orange, grape, lime and grapefruit and fruit essences including those of apple, strawberry, cherry and pineapple, or combinations thereof.

The amount of flavouring agent employed is normally a matter of preference subject to such flavours as flavour type, base type and strength desired. In general, an amount of flavouring agent of from 0.05% to 3.0%, by weight of the final bubble gum composition, is usable with an amount of from 0.3% to 1.5% being preferred, and from 0.7% to 1.2% being more preferred.

The benefits of the present invention are most clearly demonstrated when the bubble gum composition is a tart gum, i.e. a food colouring chewing gum such as one containing a citrus flavour.

One embodiment of the present invention provides a bubble gum composition, which comprises:

(a) from 5% to 45%, preferably from 15% to 25%, by weight of gum base, the gum base including from 4% to 30%, preferably from 5% to 20%, more preferably from 5% to 13%, by weight of dicalcium phosphate anhydrous as a filler;

(b) from 0.05% to 3.0% by weight of a flavouring agent;

(c) from 0.01% to 90% by weight of a sweetening agent; and

(d) remaining ingredients selected from colouring agents, emulsifiers, additional fillers, plasticizers, and elastomer solvent, and mixtures thereof: wherein the percentages of the components (a), (b) and (c) present relate to the total weight of the bubble gum composition.

The following examples serve to provide further appreciation of the present invention but are not meant in any way to restrict the effective scope of the present invention. All percentages throughout the specification are by weight as a percentage of the final bubble gum composition unless otherwise indicated.

Example 1

Gum bases were prepared using the formulations given below. As indicated, formulations A and B are typical of those prior art gum bases containing only talc as a filler. Formulations C and D have only anhydrous dicalcium phosphate as a gum base filler. A mixture of talc and anhydrous dicalcium phosphate was used in the gum bases of formulations E, F and G.

As previously discussed anhydrous dicalcium phosphate is preferred over the dihydrate from owing to its process advantages and advantageous chew, texture and flavour-release properties. Combinations of talc and anhydrous dicalcium phosphate have been found to be particularly useful in that chew, texture, flavour-release and film-forming properties can still be maintained while having the added advantage of cost saving due to the less expensive talc filler. All values in Table 1 are in % by weight of the gum base.

5

TABLE 1

| Ingredient | A | B | C | D | E | F | G |
|---|---|---|---|---|---|---|---|
| Styrene butadiene elastomer | 10.29 | 11.79 | 11.2 | 11.2 | 11.2 | 10.3 | 11.8 |
| Glycerol ester of partially hydrogenated wood rosin | 33.72 | 36.51 | 29.50 | 34.68 | 34.7 | 33.7 | 36.5 |
| Hydrogenated oil | 4.90 | 5.62 | 5.3 | 5.3 | 5.4 | 4.9 | 5.6 |
| Glycerol ester of polymerized wood rosin | 23.39 | 23.39 | 27.5 | 22.2 | 22.2 | 23.4 | 23.4 |
| Lecithin | 1.17 | 1.17 | 1.10 | 1.11 | 1.2 | 1.2 | 1.2 |
| Glycerol monostearate · | 5.66 | 5.66 | ˙5.30 | 5.41 | 5.40 | 5.653 | 5.66 |
| Butylated hydroxyanisole | 0.08 | 0.070 | 0.10 | 0.100 | 0.099 | 0.047 | 0.040 |
| Talc | 20.79 | 15.79 | — | — | 6.90 | 12.70 | 10.20 |
| Anhydrous dicalcium phosphate | — | — | 20 | 20 | 12.90 | 8.1 | 5.6 |

The gum bases above were used in formulating bubble gum compositions for the purpose of evaluating the chew properties, film-forming ability and flavour-release capability of the resultant bubble gums. All ingredients for each of the bubble gum compositions were identical except for the gum base. The formulation given below, in % by weight of the total bubble gum composition, was formulated in a manner well known in the bubble gum art, substituting each of the gum bases in Table 1 to make a total of seven bubble gum compositions.

TABLE 2

| Ingredient | % By weight of bubble gum composition |
|---|---|
| Gum base | 16.9 |
| High DE corn syrup | 24.9 |
| Caramel paste | 1.9 |
| Pulverized sugar | 53.7 |
| Malic acid | 1.0 |
| Flavour | 0.8 |
| Wesson oil | 0.1 |
| Colouring | 0.1 |
| Glycerin | 0.3 |
| Water potable | 0.3 |

Expert chew panels were invited to test the bubble gum compositions having the above formula. The members of the panel were asked to chew each bubble gum piece for approximately five (5) to seven (7) minutes. The panelists were told to evaluate the compositions for chew characteristics, film-forming (e.g. quality and ease of bubble blown), and flavour release. Each of the gum bases in Table 1 were used in the formulation of Table 2 to make a total of seven chewing gum compositions. These compositions were rated on a scale of 0—10, wherein 0 is the worst and 10 is the best. The results, which are shown below in Table 3, represent an average number of all the panel ratings. The results indicate that those formulations

6

containing the talc fillers (A and B) of the prior art, received substantially lower ratings on both chew and bubble characteristics. Those compositions containing anhydrous dicalcium phosphate as sole filler (C and D) or in admixture with talc (E and F) received significantly higher ratings than those compositions which do not contain anhydrous dicalcium phosphate. Their chew rating ranged from 6.57 to 7.14 and the bubble rating ranged from 6.57 to 7.00, which is in contrast to the prior art composition (A and B) ranges of 3.00 to 3.63 and 4.86 to 5.88 for chew and bubble respectively. As indicated, flavour release was acceptable in all compositions, except composition E which was excellent.

TABLE 3

| Gum base | Chew | Bubble | Flavour release |
|---|---|---|---|
| A (prior art) | 3.63 | 5.88 | acceptable |
| B (prior art) | 3.00 | 4.86 | acceptable |
| C | 7.10 | 6.57 | acceptable |
| D | 6.57 | 7.00 | acceptable |
| E | 7.57 | 6.86 | excellent |
| F | 7.14 | 6.80 | acceptable |
| G | 5.57 | 6.14 | acceptable |

Example 2

Three different bubble gum compositions were formulated using the aforementioned gum base E, as shown below in Table 4, for the purpose of determining flavour release, impact and tartness perception, as a function of gum base filler in combination with acidulent level. As previously mentioned, the gum base of the present invention improved the perception of flavour release and impact of the three formulations given below; formulation No. 3 is the preferred, having the best of the above-mentioned properties. The most preferred embodiment of the present invention is exemplified by this formulation. Table 4 values are given approximately in weight % of the final chewing gum composition, it being appreciated that the total value of the individual ingredients in formulations Nos. 2 and 3 slightly exceeds 100%.

TABLE 4
Formulation

| Ingredient | No. 1 | No. 2 | No. 3 |
|---|---|---|---|
| Gum base E | 17.0 | 17.0 | 17.0 |
| High DE corn syrup | 24.53 | 24.53 | 24.53 |
| Caramel paste | 2.0 | 2.0 | 2.0 |
| Pulverized sugar | 54.45 | 54.20 | 53.94 |
| Malic acid | .49 | .74 | 1.0 |
| Citrus flavour | .79 | .79 | 0.79 |
| Wesson oil | .09 | 0.9 | 0.9 |
| Colouring agent | .05 | 0.05 | 0.05 |
| Glycerin | 0.3 | 0.3 | 0.3 |
| Water potable | 0.3 | 0.3 | 0.3 |

As demonstrated by the foregoing Examples 1 and 2, bubble gum compositions containing gum bases which comprise as a filler anhydrous dicalcium phosphate, either alone, or in combination with a small amount of another filler, e.g. aluminium hydroxide, alumina, aluminium silicates, talc, or dicalcium phosphate dihydrate, exhibit the improved properties described and explained herein.

## Claims

1. A bubble gum composition which comprises a gum base, a flavouring agent, a filler, and a sweetening agent, characterised in that there is incorporated into the gum base a filler which aids the provision of improved bubble and chew characteristics, the filler in the gum base comprising anhydrous dicalcium phosphate in an amount of from 4% to 30% by weight of the gum base.

2. A bubble gum composition according to claim 1, wherein the gum base includes a natural or synthetic rubber.

3. A gum base for a bubble gum composition having improved film forming and bubble forming capability, flavour release and chew characteristics, the gum base comprising a natural or synthetic rubber and an anhydrous dicalcium phosphate filler, the filler being present in the amount of from 4% to 30% by weight of the gum base.

4. A bubble gum composition according to claim 2 or a gum base according to claim 3, wherein the natural rubber is selected from chicle, jelutong, balata, gutta-percha, lechi caspi, sorva, crown gum and mixtures thereof.

5. A bubble gum composition according to claim 2 or a gum base according to claim 3, wherein the synthetic rubber is selected from butadiene-styrene copolymers, polyisobutylene, polyethylene, polyvinyl acetate, isobutylene-isoprene copolymers and mixtures thereof.

6. A bubble gum composition according to claim 1, 2, 4 or 5, wherein the flavouring agent is selected from spearmint oil, cinnamon oil, oil of wintergreen (methyl-salicylate), lemon oil, orange oil, grape oil, lime oil, grapefruit oil, apple essence, strawberry essence, cherry essence, pineapple essence and a citrus combination.

7. A bubble gum composition according to claim 1, 2, 4, 5 or 6, wherein the sweetening agent is selected from water-soluble sweetening agents, water-soluble artificial sweeteners, dipeptide based sweeteners and mixtures thereof.

8. A bubble gum composition according to any one of claims 1, 2 and 4 to 7, which contains a material selected from colouring agents, emulsifiers, plasticizers and mixtures thereof.

9. A bubble gum composition according to claim 8 or a gum base according to any one of claims 3 to 5, which additionally contains a second filler selected from aluminium hydroxide, alumina, aluminium silicates, talc and mixtures thereof.

10. A bubble gum composition or a gum base according to claim 9, wherein the second filler is present in any amount of from 25% to 75% of the total fillers present.

11. A bubble gum composition or a gum base according to claim 10, wherein the second filler is talc.

12. A bubble gum composition which comprises:

(a) from 5% to 45%, preferably from 15% to 25%, by weight of gum base, the gum base including, as a filler to aid improved bubble and chew characteristics, from 4% to 30%, preferably from 5% to 20%, more preferably from 5% to 13%, by weight, based on the gum base, of dicalcium phosphate anhydrous;

(b) from 0.05% to 3.0% by weight of a flavouring agent;

(c) from 0.01% to 90% by weight of a sweetening agent; and

(d) remaining ingredients selected from colouring agents, emulsifiers, additional fillers, plasticizers, and elastomer solvent, and mixtures thereof: wherein the percentages of the components (a), (b) and (c) present relate to the total weight of the bubble gum composition.

## Patentansprüche

1. Kaugummimischung, bestehend aus einem Gummi-Grundbestandteil, einem Geschmacksstoff, einem Füllstoff und einem Süsstoff, dadurch gekennzeichnet, dass der Gummi-Grundbestandteil einen Füllstoff enthält, der die Blasenbildungs- und Kaueigenschaften verbessern hilft, wobei der Füllstoff im Gummi-Grundbestandteil ein wasserfreies Kalziumhydrogenorthophosphat in einer Menge von 4 bis 30 Gewichtsprozenten des Gummi-Grundbestandteils enthält.

2. Kaugummimischung nach Patentanspruch 1, in der der Gummi-Grundbestandteil Natur- oder Synthesekautschuk enthält.

3. Gummi-Grundbestandteil für eine Kaugummimischung mit verbesserten Film- und Blasenbildungseigenschaften, Geschmackfreisetzungs- und Kaueigenschaften, wobei der Gummi-Grundbestandteil einen Natur- oder Synthesekautschuk und wasserfreies Kalziumhydrogenorthophosphat als Füllstoff enthält, und wobei der Füllstoff in einer Menge von 4 bis 30 Gewichtsprozenten des Gummi-Grundbestandteils vorhanden ist.

4. Kaugummimischung nach Patentanspruch 2 oder ein Gummi-Grundbestandteil nach Patentanspruch 3, worin der Naturkautschuk ausgewählt wird aus Chicle, Djelutung, Balata, Guttapercha, Lechi Caspi, Sorva, Crowngum oder Gemischen daraus.

5. Kaugummimischung nach Patentanspruch 2 oder ein Gummi-Grundbestandteil nach Patentanspruch 3, worin der Synthesekautschuk ausgewählt wird aus Butadien-Styrol-Kopolymeren, Polyisobutylen, Polyäthylen, Polyvinylazetat, Isobutylen-Isopren-Kopolymeren oder Gemischen daraus.

6. Kaugummimischung nach Patentanspruch 1, 2, 4 oder 5, worin der Geschmackstoff ausgewählt wird aus Öl der Grünen Minze, Zimtöl, Öl des Wintergrüns (Methylsalizylath), Zitronenöl, Orangenöl,

8

Weintraubenöl, Limonellenöl, Grapefruitöl, Apfelessenz, Erdbeerenessenz, Kirschenessenz, Ananasessenz und einer Zitrusfruchtkonbination.

7. Kaugummimischung nach Patentanspruch 1, 2, 4, 5 oder 6, worin der Süsstoff ausgewählt wird aus wasserlöslichen Süsstoffen, wasserlöslichen, künstlichen Süsstoffen, Süsstoffen auf der Basis von Dipeptiden und deren Gemischen.

8. Kaugummimischung nach einem der Patentansprüche 1, 2 und 4 bis 7, die einen Stoff enthält, ausgewählt aus Farbstoffen, Emulsionsbildnern, Plastifizierungsstoffen und deren Gemischen.

9. Kaugummimischung nach Patentanspruch 8 oder ein Gummi-Grundbestandteil nach einem der Patentansprüche 3 bis 5, der zusätzlich einen zweiten Füllstoff enthält, der ausgewählt wird aus Aluminiumhydroxid, Aluminiumoxid, Aluminiumsilikaten, Talk und deren Gemischen.

10. Kaugummimischung oder Gummi-Grundbestandteil nach Patentanspruch 9, worin der zweite Füllstoff in einer Menge von 25 bis 75% des Gesamtgehaltes an Füllstoff vorhanden ist.

11. Kaugummimischung oder Gummi-Grundbestandteil nach Patentanspruch 10, worin der zweite Füllstoff Talk ist.

12. Kaugummimischung, die enthält:

(a) von 5 bis 45 Gewichtsprozente, vorzugsweise von 15 bis 25% Gewichtsprozente einen Gummi-Grundbestandteil, wobei der Gummi-Grundbestandteil einen Füllstoff enthält zur Verbesserung der Blasenbildungs- und Kaueigenschaften, von 4 bis 30 Gewichtsprozenten, bevorzugterweise von 5 bis 20 Gewichtsprozenten, und, noch mehr bevorzugterweise, von 5 bis 13 Gewichtsprozenten, bezogen auf den Gummi-Grundbestandteil, nicht-wässriges Kalziumhydrogenphosphat;

(b) von 0,05 bis 3 Gewichtsprozente eines Geschmackstoffes;

(c) von 0,01 bis 90 Gewichtsprozente eines Süssstoffes; und

(d) weitere Zutaten, ausgewählt aus Farbstoffen, Emulsionsbildnern, Zusatzfüllstoffen, Plastifizierungsstoffen, elastomeren Lösungsmitteln und deren Gemischen, und wobei die Prozentangaben der vorhandenen Bestandteile sich auf das Gesamtgewicht der Kaugummimischung beziehen.

## Revendications

1. Composition de bubble-gum comprenant une base de gomme, un agent aromatisant, une charge et un agent édulcorant, caractérisée en ce que l'on a incorporé dans la base de gomme une charge qui contribue à améliorer les caractéristiques de formation des bulles et les caractéristiques de mastication, la charge dans la base de gomme comprenant de l'hydrogénophosphate de calcium anhydre en une proportion allant de 4% à 30%, exprimés en poids par rapport à la base de gomme.

2. Composition de bubble-gum selon la revendication 1, où la base de gomme comprend une gomme naturelle ou synthétique.

3. Base de gomme pour une composition de bubble-gum présentant une aptitude améliorée à la formation de films et à la formation de bulles, et des caractéristiques améliorées de libération de l'arôme et de mastication, la base de gomme comprenant une gomme naturelle ou synthétique et une charge d'hydrogénophosphate de calcium anhydre, la charge étant présente en une proportion allant de 4% à 30%, exprimés en poids par rapport à la base de gomme.

4. Composition de bubble-gum selon la revendication 2 ou base de gomme selon la revendication 3, où la gomme naturelle est choisie parmi les gommes chicle, jelutong, balata, gutta-percha, lechi caspi, sorva, sapodilla et leurs mélanges.

5. Composition de bubble-gum selon la revendication 2 ou base de gomme selon la revendication 3, où la gomme synthétique est choisie parmi les copolymères butadiène-styrène, le polyisobutylène, le polyéthylène, le polyacétate de vinyle, les copolymères isobutylène-isoprène et leurs mélanges.

6. Composition de bubble-gum selon la revendication 1, 2, 4 ou 5, où l'agent aromatisant est choisi parmi l'essence de menthe verte, l'essence de cannelle, l'essence de wintergreen (salicylate de méthyle) l'essence de citron, l'essence d'orange, l'essence de raisin, l'essence de lime, l'essence de pamplemousse, l'essence de pomme, l'essence de fraise, l'essence de cerise, l'essence d'ananas et les mélanges d'essences d'agrumes.

7. Composition de bubble-gum selon la revendication 1, 2, 4, 5 ou 6, où l'agent édulcorant est choisi parmi les agents édulcorants solubles dans l'eau, les agents édulcorants artificiels solubles dans l'eau, les édulcorants basés sur des dipeptides et leurs mélanges.

8. Composition de bubble-gum selon l'une quelconque des revendications 1, 2 et 4 à 7, qui contient un produit choisi parmi les agents de coloration, les émulsifiants, les plastifiants et leurs mélanges.

9. Composition de bubble-gum selon la revendication 8 ou base de gomme selon l'une quelconque des revendications de 3 à 5, comprenant en plus une seconde charge, choisie parmi l'hydroxyde d'aluminium, l'alumine, les silicates d'aluminium, le talc et leurs mélanges.

10. Composition de bubble-gum ou base de gomme selon la revendication 9, où la seconde charge est présente en une proportion quelconque comprise entre 25% et 75%, exprimés par rapport à la quantité totale des charges présentes.

11. Composition de bubble-gum ou base de gomme selon la revendication 10, où la seconde charge est du talc.

12. Composition de bubble-gum qui comprend:

(a) de 5% à 45% et de préférence de 15% à 25% en poids de base de gomme, la base de gomme comprenant en guise de charge destinée à améliorer les caractéristiques de formation des bulles et les caractéristiques de mastication, de 4% à 30%, de préférence de 5% à 20%, ou encore mieux de 5% à 13% en poids d'hydrogénophosphate de calcium anhydre, exprimés par rapport à la base de gomme;

(b) de 0,05% à 3% en poids d'un agent aromatisant;

(c) de 0,01% à 90% en poids d'un agent édulcorant; et

(d) d'autres ingrédients choisis parmi les agents de coloration, les émulsifiants, d'autres charges, les plastifiants, les solvants d'élastomère et leurs mélanges; où le pourcentage des composants (a), (b) et (c) présents est donné par rapport au poids total de la composition de bubble-gum.